(19) Europäisches Patentamt

European Patent Office

Office européen des brevets

(11) **EP 3 021 070 B1**

## (12) EUROPÄISCHE PATENTSCHRIFT

(45) Veröffentlichungstag und Bekanntmachung des Hinweises auf die Patenterteilung:
**02.08.2017 Patentblatt 2017/31**

(51) Int Cl.:
*G01B 5/02* *(2006.01)*     *G01M 17/007* *(2006.01)*

(21) Anmeldenummer: **15194257.0**

(22) Anmeldetag: **12.11.2015**

(54) **VORRICHTUNG UND VERFAHREN FÜR EINE RADUMFANGSERMITTLUNG**

DEVICE AND METHOD FOR DETERMINING THE CIRCUMFERENCE OF A WHEEL

DISPOSITIF ET PROCÉDÉ DE DÉTERMINATION D'UNE JANTE DE ROUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.11.2014 DE 102014223125**

(43) Veröffentlichungstag der Anmeldung:
**18.05.2016 Patentblatt 2016/20**

(73) Patentinhaber: **MAHA Maschinenbau Haldenwang GmbH & Co. KG**
**87490 Haldenwang (DE)**

(72) Erfinder:
• **HERNANDEZ GONZALES, Andres**
**87463 Dietmannsried (DE)**
• **SEIFERT, Alexander**
**87437 Kempten (DE)**
• **BEAUJEAN, Frank**
**87542 Altusried (DE)**

(74) Vertreter: **MERH-IP Matias Erny Reichl Hoffmann Patentanwälte PartG mbB**
**Paul-Heyse-Strasse 29**
**80336 München (DE)**

(56) Entgegenhaltungen:
**DE-A1- 4 217 675       DE-A1- 4 312 636**
**DE-A1- 19 643 045      DE-C2- 2 952 730**
**DE-U1-202012 008 589**

EP 3 021 070 B1

**Beschreibung**

Die vorliegende Erfindung betrifft eine Vorrichtung und ein Verfahren für eine Radumfangsermittlung insbesondere eines Fahrzeugrades, wobei die Vorrichtung eine mit dem Rad in Verbindung bringbare, mitrotierbare Rolle aufweist. Über eine Messung bzw. Ermittlung der Raddrehzahl der mitrotierbaren Rolle lässt sich in zuverlässiger Weise der Radumfang des zu messenden Rades ermitteln.

Für die Ermittlung des Radumfangs im Rahmen der Tachographen- und/oder Taximeterprüfung waren bislang aufwendige Justierungen nötig, um den tatsächlichen Radumfang ermitteln zu können. Bisher musste grundsätzlich vor der Tachographenprüfung ein Rad über eine gerade Strecke 20 Umdrehungen lang abgewälzt werden, entlang der sogenannten Vergleichsstrecke. Dadurch konnte der aktive Radumfang erfasst werden, welcher folglich für die Tachographen- und/oder Taximeterprüfung herangezogen wurde. Das Fahrzeug musste sich zudem geradlinig auf ebenem Gelände mit einer konstanten Geschwindigkeit fortbewegen. Die Ermittlung des aktiven Radumfangs mittels der Referenzfahrt entlang der Vergleichsstrecke ist aufwendig und kostenintensiv, da das Kraftfahrzeug nur entlang einer genau vorbestimmten Vergleichsstrecke mit einer genau vorgegebenen konstanten Geschwindigkeit fortbewegt werden darf, um den aktiven Radumfang zu erfassen. Zudem ist die Radumfangsermittlung abhängig von der jeweilig vorherrschenden Witterung nur bedingt möglich, da insbesondere bei Schnee oder Regen die Ermittlung des Radumfangs auf der Vergleichsstrecke nur sehr eingeschränkt durchgeführt werden kann.

DE 19643045 betrifft eine Vorrichtung zur Ermittlung der Gerätekonstanten bei einem in einem Fahrzeug verbauten Kontrollgerät. Es wird ein mobiler Funkterminal vorgeschlagen, welcher im Fahrzeug angeordnet werden kann. Der Funkterminal kann über eine Datenverbindung zum Kontrollgerät verbunden werden und über Wegimpulse kann ein Abgleich mit dem vom Rollenprüfstand erfassten Wegstreckensignal stattfinden.

DE 20 2012 008 589 U1 betrifft eine Vorrichtung zur Ermittlung einer Genauigkeit eines in einem Fahrzeug verbauten Kontrollgerätes, insbesondere eines digitalen Tachographen. Eine Messeinrichtung und eine Erfassungseinheit tauschen über ein Kommunikationsprotokoll Befehle und Daten aus, wobei die Erfassungseinheit aus während eines Prüfvorgangs erfassten Daten mindestens eine Kenngröße ermittelt und diese weitergibt.

Es ist daher eine Aufgabe der vorliegenden Erfindung, eine Vorrichtung, ein Verfahren und ein Computerprogrammprodukt zur einfachen und schnellen Ermittlung eines Radumfangs, wie sie zum Beispiel für die Tachographen- und Taximeterprüfung erforderlich ist, bereitzustellen. Diese Aufgabe wird durch die Merkmale der unabhängigen Patentansprüche gelöst.

Die abhängigen Ansprüche betreffen vorteilhafte Ausführungsformen der Erfindung.

Die Vorrichtung zur Ermittlung des Radumfangs insbesondere eines Fahrzeugrades kann an einem Prüfstand vorgesehen sein. Zudem ist eine mit dem Rad in Verbindung bringbare, mitrotierbare Rolle Teil der Vorrichtung. Die Rolle ist als angetriebene Rolle mit einem eigenen Antrieb ausgestaltet. Über eine Drehzahlerfassungseinheit zur Erfassung der Drehzahl der Rolle kann die Drehzahl der Rolle erfasst werden. Über ein Erfassungsmittel kann der Radumfang basierend auf der Umfangsgeschwindigkeit der Rolle und der Raddrehzahl ermittelt werden, wobei die Umfangsgeschwindigkeit der Rolle aus der Drehzahl der Rolle bei Rotation des Rades mit im Wesentlichen konstanter Raddrehzahl und aus dem Rollendurchmesser oder Rollenradius ermittelt werden kann. Die Raddrehzahl kann durch eine Raddrehzahlerfassungseinheit oder über eine Schnittstelle mit einer Erfassungseinheit des Fahrzeugs erfasst werden. Somit ist es möglich, durch einen einfachen Aufbau den tatsächlichen Reifenumfang und/oder die tatsächliche Reifengeschwindigkeit zu ermitteln. Zudem ist es durch diese Anordnung möglich, auf eine Referenzfahrt entlang einer Vergleichsstrecke zu verzichten. Es ist weiterhin möglich, die Reifenumfangsmessung in einem Prüfstand durchzuführen. Die Genauigkeit der Messung wird dadurch erhöht, dass auch am gewalkten Reifen gemessen werden kann. Somit kann der tatsächliche Reifenumfang, der bei Kontakt des Reifens mit der Straße vorliegt, genau ermittelt werden.

Die Rolle ist wie bereits zuvor erwähnt als angetriebene Rolle mit einem eigenen Antrieb ausgestaltet. Daher ist es auch möglich, ein Rad ohne eigenen Antrieb über die angetriebene Rolle zu vermessen bzw. den Radumfang zu ermitteln. Bevorzugt weißt die Rolle dabei einen Außendurchmesser von im Wesentlichen 100mm auf. Die Verbindung zwischen der Rolle und dem Antrieb kann zum Beispiel über ein Getriebe hergestellt werden, wobei insbesondere über eine Kupplung die Rolle vom Antrieb ausgekuppelt werden kann, so dass die Rolle sich frei drehen kann. Bevorzug ist es auch möglich, dass die angetriebene Rolle durch einen Innenmotor (im Inneren der Rolle) angetrieben wird, sodass ein besonders platzsparender Aufbau bereitgestellt werden kann. Mit einer solchen Vorrichtung können somit nicht nur angetriebene Räder, sondern auch nicht angetriebene Räder gemessen werden, bzw. deren Radumfang ermittelt werden. Der Antrieb kann auch als Elektromotor ausgestaltet sein, wobei sich der Motor mit den über das Fahrzeug angetriebenen Rädern stromlos mitdrehen kann, wobei bevorzugt auch der Elektromotor innerhalb der Rolle vorgesehen sein kann.

Die Raddrehzahlerfassungseinheit kann eine Lichtschranke umfassen. Dabei kann ein Reflektor am Rad angebracht werden und die Lichtschranke kann über Erfassungssensoren die Bewegung des Reflektors erfassen. Durch das Einsetzen einer Lichtschranke für Erfassung der Raddrehungen kann man einfach und kostengünstig das jeweilige Start- und Endsignal für eine oder mehrere Reifenumdrehungen erfassen. Somit ist es beispielsweise auch möglich lediglich beim Start der Reifenumdrehung ein Startsignal auszugeben und nach der letzten Reifenumdrehung ein Stoppsignal auszugeben. Im rotierenden Betrieb kann die Lichtschranke auch zur Raddrehzahlerfassung benutzt werden.

Die angetriebene Rolle wird über eine Drehmomentensteuerung der Vorrichtung schlupffrei zum Rad angetrieben. Dies hat den besonderen Vorteil, dass durch die schlupffreie Ansteuerung der Rolle mit Hilfe einer Drehmomentensteuerung die Schlupfverluste die Ermittlung des Radumfangs nicht mehr bzw. nur mehr sehr reduziert beeinflussen. Somit kann dadurch die Messgenauigkeit erhöht werden. Dabei kann die angetriebene Rolle durch einen Innenmotor (im Inneren der Rolle) angetrieben werden, sodass ein besonders platzsparender Aufbau bereitgestellt werden kann.

Die Vorrichtung kann eine Radtemperaturerfassungseinheit zur Erfassung der Radtemperatur und/oder eine Rollentemperaturerfassungseinheit zur Erfassung der Rollentemperatur umfassen. Durch Erfassung der verschiedenen Temperaturen ist es möglich, die Präzision der Radumfangsermittlung weiter zu erhöhen. Eine einfache Möglichkeit der Messung dieser Temperaturen besteht im Einsatz eines Infrarotthermometers zur kontaktlosen Wärmemessung. Zudem ermöglicht der Einsatz der Infrarotthermometer die Messung der Temperatur von in sich in Bewegung befindlichen Körpern.

Ein Verfahren zur Ermittlung des Radumfangs insbesondere eines Fahrzeugrades an einem Prüfstand verwendet eine an einem Rad anliegende, mitrotierende Rolle und eine Drehzahlerfassungseinheit zur Erfassung der Drehzahl der Rolle und ein Erfassungsmittel. In einem Schritt kann dabei die Drehzahl der Rolle bei Rotation des Rades mit im Wesentlichen konstanter Raddrehzahl erfasst werden. Die Umfangsgeschwindigkeit der Rolle kann aus dem Rollendurchmesser oder Rollenradius und der Drehzahl der Rolle ermittelt werden. Der Radumfang kann somit aus der Umfangsgeschwindigkeit der Rolle und der Raddrehzahl ermittelt werden. Dadurch kann der wirksame Radumfang kostengünstig, zuverlässig und schnell ermittelt werden, ohne eine Referenzfahrt zu benötigen. Zudem ist es möglich, den wirksamen Radumfang direkt an einem Prüfstand zu ermitteln.

Das Erfassungsmittel kann den Radumfang durch Integration der Umfangsgeschwindigkeit der Rolle über die Zeit einer Reifenumdrehung ermitteln. Somit wird es durch Ermittlung der Reifenumdrehung und der Umfangsgeschwindigkeit der Rolle möglich, den Radumfang schnell und zuverlässig zu berechnen und gleichzeitig kann auch am gewalkten Reifen gemessen werden.

Die Temperatur des Reifens und/oder der Rolle können über eine Temperaturerfassungseinheit ermittelt werden und bei der Ermittlung des Reifenumfangs berücksichtigt werden. Somit kann nicht nur stationär der Reifenumfang ermittelt werden, sondern es kann zusätzlich auch die Messgenauigkeit erhöht werden.

Die Raddrehzahl kann über eine Schnittstelle mit einer Erfassungseinheit des Fahrzeugs an die Vorrichtung übermittelt werden. Eine solche Erfassungseinheit eines Fahrzeugs ist insbesondere der Drehzahlmesser bzw. Drehzahlsensoren, die beispielsweise an den Radnaben des Fahrzeugs angebracht sind. Insbesondere Fahrzeuge, die mit ABS ausgestattet sind, weisen solche Drehzahlsensoren auf, so dass durch die Übermittlung der Raddrehzahl über die Fahrzeug-Diagnose-Schnittstelle auf einfache und genaue Weise die Raddrehzahl für die Berechnung des wirksamen Radumfangs ermittelt werden kann.

Die Raddrehzahl kann zudem über eine zusätzliche, Messrolle, welche am Rad mitrotiert und einen Drehzahlsensor umfasst, ermittelt werden. Dabei können insbesondere Magnetfeldsensoren zum Einsatz kommen, um eine einfache und zuverlässige Messung der Drehzahl zu gewährleisten.

Die Vorrichtung zur Ermittlung des Radumfangs kann eine mit dem Rad in Verbindung bringbare, mitrotierbare Rolle aufweisen, wobei die Umfangslinie jedes einzelnen Querschnitts der Radkontaktfläche der Rolle zwischen zwei konzentrischen Kreisen mit radialem Abstand von 5 bis 0,01 mm, und bevorzugt kleiner als 1 mm, liegen. Mit anderen Worten, zur Erhöhung der Messgenauigkeit wird eine Rolle bereitgestellt, welche einen sehr eng tolerierten Umfang umfasst, wobei die Rundheitsabweichung der Zylindermantelfläche bevorzugt kleiner als 1 mm sein kann. Dadurch kann die Genauigkeit der Messung erhöht werden.

Somit liegt die Zylindermantelfläche der Rolle bevorzugt zwischen zwei koaxialen Zylindern mit einem radialen Abstand von maximal 0,5 mm bzw. bevorzugt 0,1 mm. Zusätzlich kann auch die Tolerierung der Geradheitsabweichung der Achse der Rolle in einem Bereich unter 0,5 mm und bevorzugt unter 0,2 mm liegen, so dass die Rolle durch die engen Toleranzen eine hohe Messgenauigkeit für die Messung des tatsächlichen Radumfangs ermöglicht.

Die mitrotierbare Rolle kann in einen Prüfstand eingebaut sein. Zudem kann die Rolle auf einer Hebebühne eingebaut sein. Durch diese stationäre Anbringung der Rolle für die Umfangsmessung ist es möglich, direkt in der Werkstatt den tatsächlichen Reifenumfang zu bestimmen, wodurch die Bestimmung einerseits witterungsunabhängig ist und andererseits die Ermittlung des tatsächlichen Reifenumfangs mit zum Beispiel der Wartung des Kraftfahrzeugs kombiniert werden kann, zum Beispiel der Inspektion des Unterbodens. Dadurch wird die Effizienz des Prüfverfahrens erhöht und gleichzeitig können die Kosten reduziert werden.

Die mitrotierbare Rolle kann in einem Prüfstand mit einer Hebebühne zum Anheben eines Kraftfahrzeuges vorgesehen sein. Dabei kann die Rolle in einer Rollenprüfeinrichtung vorgesehen sein wobei die Rolle positionierbar bzw. verfahrbar vorgesehen sein kann. Insbesondere kann durch ein Ausfahren der Haltevorrichtung der Rolle an die Radaußenfläche ein Kontakt zwischen der Rolle und dem Rad bzw. dem Fahrzeugreifen hergestellt werden. Somit kann das Fahrzeug mittels der Hebevorrichtung angehoben werden und gleichzeitig kann die Rolle mit einem Rad des Fahrzeugs in Kontakt gebracht werden. Somit kann die Rolle am belasteten als auch am entlasteten Rad des Fahrzeugs eingesetzt werden wodurch die Prüfmöglichkeiten auf einfache Weise erweitert werden. Zudem ist es möglich dass der Prüfstand vier Rollenprüfeinrichtungen aufweist, sodass an allen vier Rädern eine Umfangsermittlung durchgeführt werden kann ohne das Fahrzeug neu positionieren zu müssen. Ferner kann die Hebevorrichtung zumindest eine Hebeeinrichtung aufweisen, die an einem Werkstattboden oder in einer Werkstattgrube angeordnet sein kann. Die Hebeeinrichtung kann dazu eingerichtet sein, ein Kraftfahrzeug derart von dem Wertstattboden oder einem Grubenboden anzuheben, dass die Räder zumindest teilweise von einem Eigengewicht des Kraftfahrzeuges entlastet sind. Die Hebeeinrichtung kann bevorzugt eine Scherenhebebühne, eine Hubstempel-Bühne und/oder eine Säulenhebebühne umfassen.

Diese Ausgestaltung kann somit die Möglichkeit umfassen, das Kraftfahrzeug direkt von einem Boden einer Werkstatt bzw. einer Grube abzuheben, ohne dass die Notwendigkeit besteht, das Kraftfahrzeug auf anhebbaren Fahrschienen abzustellen. Dies kann beispielsweise dadurch realisiert werden, dass die Hebevorrichtung ein auf einem Boden einer Werkstatt bzw. einer Grube aufgestellter Radfreiheber oder eine Säulenhebebühne ist. Die Rollenprüfeinrichtung kann auch unmittelbar auf dem Boden der Werkstatt bzw. der Grube angeordnet werden.

Ferner kann die Hebevorrichtung ein Radfreiheber sein und auf einer zweiten Hebevorrichtung angeordnet sein. Die zweite Hebevorrichtung kann zumindest eine Fahrschiene zum Aufnehmen des zu prüfenden Kraftfahrzeugs und zumindest einen Hubmittel zum Anheben der Fahrschiene aufweisen. Die zweite Hebevorrichtung kann bevorzugt eine Scherenhebebühne sein, die auf den Fahrschienen montierte Radfreiheber aufweisen kann. Die Rolle bzw. die Rollen zur Durchführung der Funktionsprüfungen können bevorzugt von einer Oberfläche der Fahrschiene(n) aus zu den Rädern hin verfahren werden.

Ferner können zumindest zwei Rollenprüfeinrichtungen an der Fahrschiene angeordnet sein. Zumindest eine Rollenprüfeinrichtung kann einem Vorderrad und zumindest eine Rollenprüfeinrichtung kann einem Hinterrad des Kraftfahrzeuges zuordenbar sein. Die Anordnung von zwei Rollenprüfeinrichtungen je Fahrschiene ermöglicht, dass an den Vorder- und Hinterrädern des Kraftfahrzeugs eine Rolle angeordnet werden kann, so dass eine hohe Flexibilität hinsichtlich der Durchführung der Prüfungsvorgänge ermöglicht wird. Mit dieser Anordnung können z.B. sowohl hinterrad- als auch vorderradangetriebene Kraftfahrzeuge geprüft werden. Ebenso können auch Allradfahrzeuge geprüft werden.

Zumindest eine der Rollenprüfeinrichtungen kann entlang einer Längsrichtung der Fahrschiene verschiebbar gelagert sein, so dass eine erhöhte Flexibilität bei der Radstandanpassung auf verschiedene Kraftfahrzeugtypen ermöglicht wird. Bevorzugt kann die entlang einer Längsrichtung der Fahrschiene verschiebbare Rollenprüfeinrichtung in eine Führungsnut eingreifen, die jeweils an den Seitenkanten der Fahrschiene angeordnet sein kann, so dass die Rollenprüfeinrichtung entlang der Führungsnut verschiebbar gelagert werden kann.

Ferner kann die zumindest eine der Rollenprüfeinrichtungen auch auf einem Werkstattboden oder Grubenboden, insbesondere in Längsrichtung eines zu prüfenden Kraftfahrzeuges, verschiebbar gelagert sein. Dies wird bevorzugt, wenn die Rollenprüfeinrichtung auf dem Boden angeordnet ist; beispielsweise, wenn nur eine erste Hebevorrichtung vorgesehen ist. Das Verschieben der Rollenprüfeinrichtung kann sowohl manuell als auch mittels eines Antriebsmotors erfolgen.

Ferner kann eine Rollenprüfeinrichtung zumindest eine antreibbare Rolle und eine Positioniervorrichtung, die dazu geeignet sein kann, eine Position der antreibbaren Rolle zu verändern, aufweisen.

Die Messung der Drehzahl der Rolle kann über eine hochauflösende Drehzahlmessung erfolgen. Insbesondere über einen Messlagerring an einem Lager der Rolle (Messrolle) ist eine genaue Ermittlung der Drehzahl der Rolle möglich und somit eine präzise Ermittlung des tatsächlichen Reifenumfangs.

Zusammenfassend ermöglicht die Erfindung somit, dass der tatsächliche Reifenumfang eines Reifens auf einfache Weise und mit hoher Genauigkeit ermittelt werden kann.

Die Erfindung wird im Folgenden exemplarisch mit Bezug auf die beigefügten schematischen Zeichnungen beschrieben.

Figur 1:  zeigt die Messung des Radumfangs gemäß dem Stand der Technik.
Figur 2:  zeigt eine schematische Funktionsweise des Verfahrens der vorliegenden Erfindung.
Figur 3:  zeigt einen exemplarischen Aufbau der vorliegenden Erfindung.

Im Folgenden werden verschiedene Beispiele der vorliegenden Erfindung detailliert unter Bezugnahme auf die Figuren beschrieben. Gleiche bzw. ähnliche Elemente in den Figuren werden hierbei mit gleichen Bezugszeichen bezeichnet. Die vorliegende Erfindung ist jedoch nicht auf die beschriebenen Merkmale begrenzt, sondern umfasst weiterhin Modifikationen von Merkmalen der beschriebenen Beispiele und Kombinationen von Merkmalen verschiedener Beispiele im Rahmen des Umfangs der unabhängigen Ansprüche.

Bisher musste grundsätzlich vor der Tachographenprüfung ein Rad 1 über einer gerade Strecke 20 Umdrehungen lang abgewälzt werden, entlang der sogenannten Vergleichsstrecke. Je nach Anwendung wird bei der Tachographenprüfung entweder der tatsächliche Reifenumfang oder die tatsächliche Reifengeschwindigkeit gesucht. Die vorliegende Erfindung ermöglicht es, eine genaue Tachographenprüfung ohne diesen Aufwand durch das Abrollen einer Vergleichsstrecke durchzuführen.

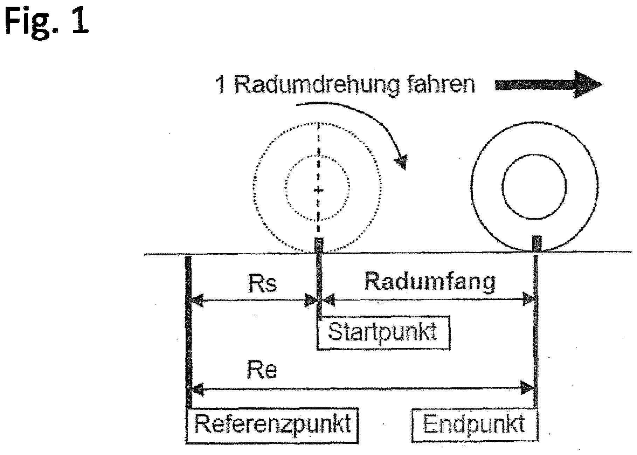

In Figur 1 ist die bekannte Tachographenprüfung dargestellt. Halter, deren Kraftfahrzeuge mit einem Fahrtenschreiber nach § 57a, Abs. 1 StVZO oder mit einem Kontrollgerät nach der Verordnung (EWG) Nr. 3821/85 ausgerüstet sind, haben auf ihre Kosten die Fahrtenschreiber oder die Kontrollgeräte darauf prüfen zu lassen, dass Einbauzustand und Messgenauigkeit sowie Arbeitsweise vorschriftsmäßig sind. Bekanntermaßen ist die Messung der Anzeigefehler beim Einbau und während der Benutzung unter folgenden Bedingungen durchzuführen, welche als normale Prüfbedingungen anzusehen sind:

1. Unbeladenes Fahrzeug in fahrbereitem Zustand,
2. Reifendruck gemäß den Angaben des Herstellers,
3. Reifenabnutzung innerhalb der gesetzlich zulässigen Grenzen,
4. Bewegen des Fahrzeugs: das Fahrzeug muss sich mit eigener Motorkraft geradlinig auf ebenem Gelände und mit einer Geschwindigkeit von 50 $\pm$ 5 km/h fortbewegen,
5. Vergleichsstrecke: um den aktiven Radumfang zu erfassen, wird ein Rad 1 über eine gerade Strecke 20 Umdrehungen lang abgewälzt.

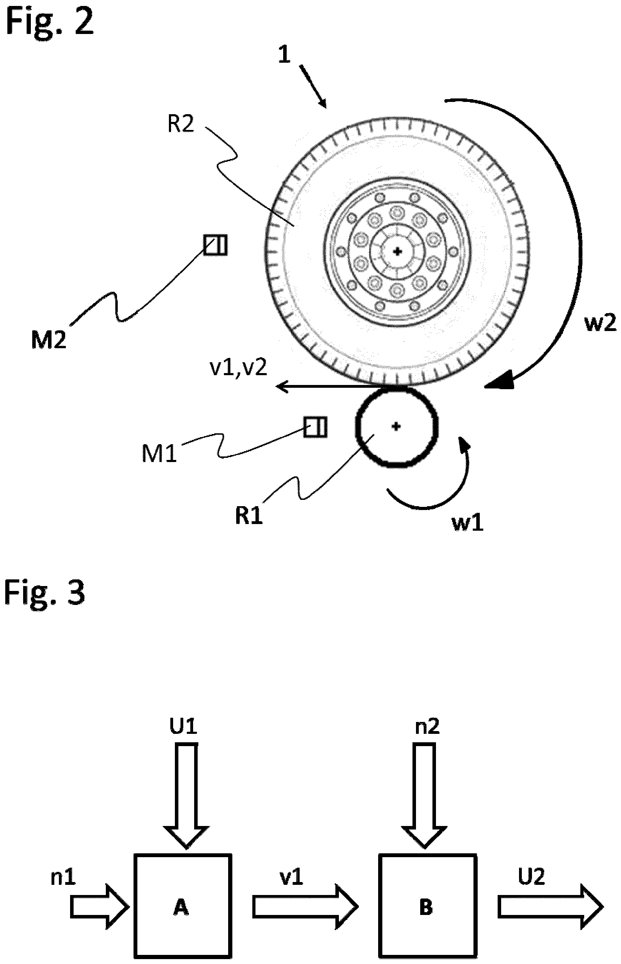

Dieser Vorgang ist auch in Figur 1 dargestellt. Gemäß der vorliegenden Erfindung kann die Messung auch auf einem geeigneten Prüfstand durchgeführt werden und die Punkte 4 und 5 entfallen dabei. In Figur 2 ist die schematische Ermittlung des aktiv wirkenden Umfangs eines Reifens R2 gezeigt. Über eine sich lose drehende Rolle R1 mit genau bekanntem Umfang und hochauflösender Drehzahlmessung wird die Umfangsgeschwindigkeit der Rolle R1 ermittelt. Der Umfang des Reifens R2 wird mittels Integration der Umfangsgeschwindigkeit der Rolle R1 über die Zeit, die für eine Radumdrehung benötigt wird, berechnet. Dabei ist eine einzige Radumdrehung bei konstant gehaltener Geschwindigkeit ausreichend. Über mehrmaliges Abwälzen wird jedoch die Genauigkeit der Messung erhöht.

Für nicht angetriebene Fahrzeugachsen verfügt die Rolle R1 über einen eigenen Antrieb. Die Rolle R1 für die Umfangsmessung kann in einem Prüfstand oder auch auf einer Hebebühne eingebaut sein. Die hochauflösende Drehzahlmessung erfolgt über die Messeinrichtung M1. Beim Beschleunigungsvorgang auf eine gewisse Geschwindigkeit befindet sich das System zwischen Rolle R1 und dem Reifen R2 im Ungleichgewicht. Es besteht ein Unterschied zwischen den verschiedenen Umfangsgeschwindigkeiten der Rolle R1, der Umfangsgeschwindigkeit der Rolle $V_1$, und der Umfangsgeschwindigkeit des Reifens $V_2$. Dieser Unterschied wird als Schlupf bezeichnet. Das treibende Element (insbesondere der Fahrzeugreifen oder auch die Prüfstandsrolle) eilt dem getriebenen Element voraus. Der Beitrag des Schlupfes ist proportional zu der Beschleunigung des treibenden Elements, der Massenträgheit des angetriebenen Elements, sowie proportional zur Reibung und den Verlusten im System. Der Schlupf ist gleich Null bei Stillstand oder wenn die Beschleunigung gleich Null ist (also die Geschwindigkeit konstant) und es sich in einem idealen System ohne Reibung oder Verluste befindet. Somit werden zwei Zustände abgeleitet, in denen eine Umfangsmessung des Reifens R2 möglich ist:

Einerseits ist die Messung im Schlupfzustand möglich. Dies ist der Zustand nicht kompensierter Verluste. Das treibende Element (Rolle R1 oder Rad 1/Reifen R2) gibt eine konstant voreilende Geschwindigkeit vor. Das getriebene Element läuft der voreilenden Geschwindigkeit abzüglich der geringeren Verluste (Reibung in Lagern und Dichtungen, Luftreibungen) hinterher. Da die Verluste im System über den gesamten Reifenumfang konstant angenommen werden, ist der Fehler der Messung gering bzw. die Wiederholbarkeit groß. Zur Erhöhung der Messgenauigkeit kann deshalb bei der Vorrichtung zur Ermittlung des Radumfangs auch ein Korrekturglied vorgesehen werden, über welches die Verluste wie zum Beispiel die Reibung in den Lagern und Dichtungen oder auch die Luftreibung berücksichtigt werden kann. Zudem kann über dieses Korrekturglied auch die Umgebungstemperatur erfasst werden, so dass temperaturbedingte Abweichungen auch korrigiert werden können.

Die Umfangsmessung ist zudem im Ideal- bzw. Gleichgewichtszustand möglich. Der Systemzustand wird als ideal bezeichnet, wenn die Systemverluste gemessen und durch Zugabe einer Leistung am getriebenen Element kompensiert werden. Um diesen Zustand zu erreichen, sind zwei angetriebene Elemente (Reifen R2 bzw. Rad 1 als auch Rolle R1) erforderlich. In diesem Zustand ist die genaueste Methode der Messung des Reifenumfangs gegeben. Mit dieser Methode wird somit die Wiederholbarkeit und die Reproduzierbarkeit die Messung auf höchstem Niveau betrieben. Besonders vorteilhaft ist es, wenn die Rolle einerseits freigegeben werden kann und andererseits in eine Wirkverbindung mit einem Antrieb geschalten werden kann, so dass über die Rolle R1 sowohl im Schlupfzustand als auch im Gleichgewichtszustand eine Messung durchgeführt werden kann. Dies kann zum Beispiel durch eine Kupplung oder ein Getriebe implementiert werden. Die Messung der Drehzahl des Reifens R2 (bzw. des Rades 1) kann über einen eigenen Drehzahlmesser bzw. einen eigenen Sensor M2 durchgeführt werden oder auch direkt über eine Schnittstelle mit dem Erfassungsmittel des Fahrzeuges, welches die Raddrehzahl bereits ermittelt (z. B. ABS).

Die Ermittlung des tatsächlichen Reifenumfangs erfolgt durch folgende Berechnung:

Die Umfangsgeschwindigkeiten der Rolle R1 (mit dem Radius $r_1$) und des Reifens R2 (mit dem Radius $r_2$) bzw. des Rads 1 sind gleich und konstant (Berechnung gemäß dem ersten Ausführungsbeispiel). Somit ist die erste Umfangsgeschwindigkeit $v_1$ gleich der zweiten Umfangsgeschwindigkeit $v_2$.

$$\vec{v_1} = \vec{v_2}$$

Die Geschwindigkeit der Rolle R1 wird durch die ermittelt Drehzahl der Rolle R1, welche beispielsweise durch die Drehzahlerfassungseinheit M1 ermittelt wurde, und den bekannten Umfang der Rolle R1 ermittelt.

$$\vec{v_1} = \omega_1 \cdot r_1 = 2 \cdot \pi \cdot n_1 \cdot r_1 = U_1 \cdot n_1$$

Somit wird die Geschwindigkeit der Rolle R1 am Umfang über die Drehzahl der Rolle R1 und den Umfang der Rolle R1 ermittelt. In Form von Lichtschranken mit am Reifen befestigten Reflektoren oder Ähnlichem Hilfsmitteln wird das Signal einer jeweiligen Radumdrehung zum Beispiel des Reifens R2 ermittelt und in weiterer Folge übertragen. Zusätzlich kann die Information über die jeweilige Radumdrehung auch über einen anbringbaren Hall-Sensor oder sonstige induktive Sensoren ermittelt werden. Für die Messung der Drehzahl ist es vorteilhaft, einen Aktivsensor zu verwenden, da dadurch einerseits die Vorwärts- und Rückwärtsbewegung des Reifens R2 (bzw. Rades 1) erkannt werden kann und auch eine Geschwindigkeitsmessung bis zu 0,1 km/h, was bereits im Moment des Anfahrens von Bedeutung ist. Zusätzlich hat die Drehzahlmessung über Aktivsensoren den Vorteil, dass diese gegenüber elektromagnetischer Störungen unempfindlicher sind als passive Sensoren und eine Veränderung des Luftspalts zwischen Sensor und Magnetring keine direkten Auswirkungen auf das Signal hat und zusätzlich diese Aktivsensoren weitgehend unempfindlich gegenüber Vibrationen und Temperaturschwankungen sind. Somit kann dadurch die Messung des aktiven Radumfangs mit erhöhter Genauigkeit durchgeführt werden.

Durch Integration der Geschwindigkeit $v_1$ über die Zeit t, die für eine Reifenumdrehung benötigt wird, ergibt sich der Reifenumfang.

$$U_{2(t)} = \int_{t0}^{tn} f_{(\vec{v_1})} \, d_t$$

Durch Integration mehrerer Reifenumdrehungen am Stück und Division durch die Anzahl der Durchläufe werden der Mittelwert und dessen Standardabweichung berechnet. Dadurch wird der Fehler der Messung weiter verringert.

In einem zweiten Ausführungsbeispiel besteht die Möglichkeit mittels Fahrzeugdiagnose die Drehzahlen des Fahrzeugreifens zu ermitteln, und diese über eine Schnittstelle dem Erfassungsmittel bzw. der Vorrichtung zur Ermittlung des Radumfangs mitzuteilen. In jedem mit ABS ausgestatteten Fahrzeug sind Drehzahlsensoren an den Radnaben angebracht. Es besteht also die Möglichkeit, die direkte Drehzahl des Reifens R2 zu ermitteln und über die Schnittstellen weiterzuleiten.

Um den Umfang des Reifens R2 zu berechnen, kann folgende Gleichung aufgestellt werden:

$$\omega 1 \; x \; U1 = \omega 2 \; x \; U2$$

Den Umfang des Reifens R2 (= Radumfang U2), erhält man durch Auflösung der obigen Gleichung zu:

$$U2 = (n1 \; x \; U1) / n2$$

Die Vorrichtung bzw. das Erfassungsmittel zur Ermittlung des Radumfangs kann bevorzugterweise über einen OBD-Stecker mit dem Fahrzeug verbunden werden.

In Figur 3 ist nochmals eine schematische Darstellung der Funktionsweise der Umfangsermittlung dargestellt. Insbesondere sind dabei die Eingangsgrößen, welche durch Messung oder über eine Schnittstelle ermittelt werden, und die gesuchte Ausgangsgröße U2 dargestellt. Im Funktionsblock A wird aus dem Umfang der Rolle U1 und der Drehzahl n1 die Umfangsgeschwindigkeit v1 der Rolle R1 ermittelt. Das Ergebnis des Funktionsblocks A wird zum Funktionsblock B geführt. In Funktionsblock B wird über die Drehzahl n2 der Umfang des Rades U2 ermittelt.

Zusammenfassend ist festzuhalten, dass mittels der erfindungsgemäßen Vorrichtung und dem erfindungsgemäßen Verfahren eine Radumfangsermittlung, wie sie zum Beispiel für eine Tachographen- oder Taximeterprüfung erforderlich ist, auf schnelle und einfache Weise durchgeführt werden kann. Zudem ist es durch die erfindungsgemäße Vorrichtung und das erfindungsgemäße Verfahren möglich, die Radumfangsermittlung in einem Prüfstand oder auf einer Hebebühne durchzuführen, so dass eine Referenzfahrt überflüssig wird.

**Patentansprüche**

1.  Vorrichtung zur Ermittlung des Radumfangs, insbesondere eines Fahrzeugrades (1) an einem Prüfstand, mit einer mit einem Rad (R2) in Verbindung bringbaren, mitrotierbaren Rolle (R1), einer Drehzahlerfassungseinheit (M1) zur Erfassung der Drehzahl n1 der Rolle (R1), und
einem Erfassungsmittel zur Ermittlung des Radumfangs basierend auf der Umfangsgeschwindigkeit v1 der Rolle (R1) und der Raddrehzahl n2 wobei die Umfangsgeschwindigkeit der Rolle (R1) aus der Drehzahl n1 der Rolle (R1) bei Rotation des Rades (R2) mit im wesentlichen konstanter Raddrehzahl n2 und aus dem Rollendurchmesser oder Rollenradius ermitteln wird und wobei die Raddrehzahl n2 durch eine Raddrehzahlerfassungseinheit des Erfassungsmittels oder über eine Schnittstelle des Erfassungsmittels mit einer Erfassungseinheit des Fahrzeugs erfasst wird, wobei die Rolle (R1) als angetriebene Rolle (R1) mit einem eigenen Antrieb ausgestaltet ist und die Vorrichtung eine Drehmomentensteuerung aufweist, die ausgestaltet ist, die angetriebene Rolle (R1) schlupffrei zum Rad (R2) anzutreiben.

2.  Vorrichtung nach Anspruch 1, **dadurch gekennzeichnet, dass** die Raddrehzahlerfassungseinheit eine Lichtschranke umfasst.

3.  Vorrichtung nach zumindest einem der Ansprüche 1 oder 2, **dadurch gekennzeichnet, dass** eine Radtemperaturerfassungseinheit zur Erfassung der Radtemperatur und/oder eine Rollentemperaturerfassungseinheit zur Erfassung der Rollentemperatur vorgesehen ist.

4.  Verfahren zur Ermittlung des Radumfangs, insbesondere eines Fahrzeugrades (1), an einem Prüfstand, mit einer an einem Rad (R2) anliegenden, mitrotierenden Rolle (R1) und einer Drehzahlerfassungseinheit (M1) zur Erfassung der Drehzahl n1 der Rolle (R1) und einem Erfassungsmittel, wobei die Rolle (R1) als angetriebene Rolle (R1) mit einem eigenen Antrieb ausgestaltet ist und die angetriebene Rolle (R1) über eine Drehmomentensteuerung schlupffrei zum Rad (R2) angetrieben wird
mit den Schritten

- Erfassung der Drehzahl n1 der Rolle (R1) bei Rotation des Rades (R2) mit im wesentlichen konstanter Raddrehzahl n2,
- Ermittlung der Umfangsgeschwindigkeit v1 der Rolle (R1) aus dem Rollendurchmesser oder Rollenradius und der Drehzahl der Rolle (R1), und
- Ermittlung des Radumfangs aus der Umfangsgeschwindigkeit v1 der Rolle (R1) und der Raddrehzahl n2 oder Ermittlung des Radumfangs durch Integration der Umfangsgeschwindigkeit v1 der Rolle (R1) über die Zeit einer Reifenumdrehung.

5.  Verfahren nach Anspruch 4, **dadurch gekennzeichnet, dass** die Temperatur des Rads (R2) und/oder der Rolle (R1) über eine Temperaturerfassungseinheit ermittelt wird und bei der Ermittlung des Radumfangs berücksichtigt wird.

6.  Computerprogrammprodukt ausgestattet zur Ausführung des Verfahrens nach zumindest einem der vorgenannten Ansprüche 4 oder 5 auf einem Computer.

**Claims**

1. A device for determining the wheel circumference, in particular of a vehicle wheel (1), at a test bench, comprising a co-rotatable roller (R1) connectable to a wheel (R2), a rotational speed acquisition unit (M1) for acquiring the rotational speed n1 of the roller (R1), and
an acquisition means for determining the wheel circumference based on the circumferential speed v1 of the roller (R1) and the wheel rotational speed n2, wherein the circumferential speed of the roller (R1) is determined from the rotational speed n1 of the roller (R1) during rotation of the wheel (R2) with a substantially constant wheel rotational speed n2 and from the roller diameter or roller radius and wherein the wheel rotational speed n2 is acquired by a wheel rotational speed acquisition unit of the acquisition means or via an interface of the acquisition means with an acquisition unit of the vehicle, wherein the roller (R1) is configured as a driven roller (R1) with an own drive and the device has a torque control, which is configured to drive the driven roller (R1) without slip towards the wheel (R2).

2. The device according to claim 1, **characterized in that** the wheel rotational speed acquisition unit includes a light barrier.

3. The device according to at least one of claims 1 or 2, **characterized in that** a wheel temperature acquisition unit for acquiring the wheel temperature and/or a roller temperature acquisition unit for acquiring the roller temperature are provided.

4. A method for determining the wheel circumference, in particular of a vehicle wheel (1), at a test bench, with a co-rotating roller (R1) abutting on a wheel (R2) and a rotational speed acquisition unit (M1) for acquiring the rotational speed n1 of the roller (R1) and an acquisition means, wherein the roller (R1) is configured as a driven roller (R1) with an own drive, and the driven roller (R1) is driven without slip to the wheel (R2) via a torque control, including the steps of

- acquiring the rotational speed n1 of the roller (R1) during rotation of the wheel (R2) with a substantially constant wheel rotational speed n2,
- determining the circumferential speed v1 of the roller (R1) from the roller diameter or roller radius and the rotational speed of the roller (R1), and
- determining the wheel circumference from the circumferential speed v1 of the roller (R1) and the wheel rotational speed n2 or determining the wheel circumference by integrating the circumferential speed v1 of the roller (R1) over the time period of a tire revolution.

5. The method according to claim 4, **characterized in that** the temperature of the wheel (R2) and/or of the roller (R1) is determined via a temperature acquisition unit and taken into account in determining the wheel circumference.

6. A computer program product configured to perform the method according to at least one of the preceding claims 4 or 5 on a computer.


**Revendications**

1. Dispositif de détermination de la circonférence d'une roue, en particulier d'une roue de véhicule (1), sur un banc d'essai, comportant
un rouleau (R1) susceptible d'être amené en liaison avec la roue (R2) et de tourner avec celle-ci,
une unité de détection de vitesse de rotation (M1) pour détecter la vitesse de rotation n1 du rouleau (R1), et
un moyen de détection pour déterminer la circonférence de la roue en se basant sur la vitesse circonférentielle v1 du rouleau (R1) et sur la vitesse de rotation de roue n2, la vitesse circonférentielle du rouleau (R1) étant déterminée à partir de la vitesse de rotation n1 du rouleau (R1) pendant la rotation de la roue (R2) à une vitesse de rotation n2 sensiblement constante et à partir du diamètre du rouleau ou du rayon du rouleau, et la vitesse de rotation n2 de la roue étant détectée par une unité de détection de vitesse de rotation de roue du moyen de détection ou par une interface du moyen de détection avec une unité de détection du véhicule, le rouleau (R1) en tant que rouleau entraîné (R1) étant configuré avec un propre entraînement, et le dispositif comprenant une commande du couple de rotation qui est configurée pour entraîner le rouleau entraîné (R1) sans glissement par rapport à la roue (R2).

2. Dispositif selon la revendication 1, **caractérisé en ce que** l'unité de détection de la vitesse de rotation de la roue comprend une barrière photoélectrique.

**3.** Dispositif selon l'une au moins des revendications 1 ou 2, **caractérisé en ce qu'**il est prévu une unité de détection de température de la roue pour détecter la température de la roue et/ou une unité de détection de température de rouleau pour détecter la température du rouleau.

**4.** Procédé de détermination de la circonférence d'une roue, en particulier d'une roue de véhicule (1), sur un banc d'essai, avec un rouleau (R1) appliqué contre une roue (R2) et tournant avec celle-ci, et une unité de détection de vitesse de rotation (M1) pour détecter la vitesse de rotation n1 du rouleau (R1), et un moyen de détection, le rouleau (R1) en tant que rouleau entraîné (R1) étant configuré avec un propre entraînement, et le rouleau entraîné (R1) est entraîné par une commande de couple de rotation sans glissement par rapport à la roue (R2),
comprenant les étapes consistant à

- détecter la vitesse de rotation n1 du rouleau (R1) pendant la rotation de la roue (R2) à une vitesse de rotation n2 sensiblement constante de la roue,
- déterminer la vitesse circonférentielle v1 du rouleau (R1) à partir du diamètre du rouleau ou du rayon du rouleau et de la vitesse de rotation du rouleau (R1), et
- déterminer la circonférence de la roue à partir de la vitesse circonférentielle v1 du rouleau (R1) et de la vitesse de rotation n2 de la roue ou déterminer la circonférence de la roue par intégration de la vitesse circonférentielle v1 du rouleau (R1) sur la durée temporelle d'un tour du pneumatique.

**5.** Procédé selon la revendication 4, **caractérisé en ce que** l'on détermine la température de la roue (R2) et/ou du rouleau (R1) par une unité de détection de température et on la prend en compte pour déterminer la circonférence de la roue.

**6.** Produit de programme informatique configuré pour mettre en oeuvre le procédé selon l'une au moins des revendications précédentes 4 ou 5 sur un ordinateur.

# Fig. 1

1 Radumdrehung fahren

Rs  
Radumfang  
Startpunkt  
Re  
Referenzpunkt  
Endpunkt

# Fig. 2

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19643045
- DE 202012008589 U1